Europäisches Patentamt

European Patent Office

Office européen des brevets

(11) Publication number: **0 274 165 B1**

# (12) EUROPEAN PATENT SPECIFICATION

(45) Date of publication of patent specification: **18.03.92**    (51) Int. Cl.⁵: **C01B  31/04**, B01J 8/24

(21) Application number: **87300021.0**

(22) Date of filing: **05.01.87**

(54) **Thermal purification of natural mineral carbons.**

(43) Date of publication of application:
**13.07.88 Bulletin  88/28**

(45) Publication of the grant of the patent:
**18.03.92 Bulletin  92/12**

(84) Designated Contracting States:
**AT BE CH DE FR GB IT LI LU NL SE**

(56) References cited:
**FR-A- 463 609**
**US-A- 1 506 537**

**CHEMICAL ABSTRACTS, vol. 79, no. 4, 30th
July 1973, page 142, abstract no. 20974e,
Columbus, Ohio, US, M.A. AVDEENKO et al.:
"Purification of graphite to a high degree of
purity", & TSVET. METAL. 1973, (2), 48-50**

**CHEMICAL ABSTRACTS, vol. 92, no. 2, 14th
January 1980, page 104, abstract no. 8351k,
Columbus, Ohio, US; G.A. PERKOVA et al.:
"Study of thermal and gas-thermal refining
of carbon phases", & KHIM. TVERD.
TOPL.(MOSCOW) 1979, (4), 37-43**

(73) Proprietor: **SUPERIOR GRAPHITE CO.**
**20 North Wacker Drive**
**Chicago, IL 60606(US)**

(72) Inventor: **Goldberger, William Morgan**
**2175 East Broad Street**
**Columbus Ohio 43209(US)**
Inventor: **Carney, Peter R.**
**120 South Riverside Plaza**
**Chicago§Illinois 60606(US)**
Inventor: **Reed, Allan K.**
**Superior Graphite Co. P.O. Box 535**
**Hopkinsville Kentucky 42240(US)**

(74) Representative: **Wain, Christopher Paul et al**
**A.A. THORNTON & CO. Northumberland
House 303-306 High Holborn
London WC1V 7LE(GB)**

**Description**

The present invention is directed in general to the purification of carbonaceous materials and more particularly to thermally purified natural mineral carbons.

The present invention relates yet more particularly to a class of natural carbon products, of improved purity, strength and electrical conductivity which may be made by a continuous process. The products of this invention are well-crystallized graphitic carbons obtained from natural graphites, natural carbons and other compounds by the rapid volatilization of impurities such as the gangue components generally associated with a natural carbon mineral. More specifically, the products of this invention are characterized by their extremely high purity, high degree of crystallinity, high electrical conductivity, and substantially higher strength and resiliency or recovery after deformation.

Natural mineral graphites have many industrial uses depending on the type and grade of the graphite ore. The natural graphite, known as plumbago and black lead, is a soft black or sometimes shiny crystalline carbon ranging in size from extremely fine powder to lumps of one inch in diameter. Mineral graphite is resistant to attack by ordinary chemical agents, and has high melting and vaporization points. It is, therefore, useful for example as an ingredient in facing materials for foundries. Unlike most natural minerals, graphite is soft and unctious and, therefore, may be used as a lubricant either dry, or in oil- or water-based suspension. It is also used as an ingredient of paints and stove polishes. Importantly also, graphite is good electrical conductor which makes it particularly suited for use in carbon brushes in electric motors. Its electrical conductivity is of considerable importance in the use of graphite with manganese dioxide in making dry cell type batteries. Fuel cells for direct electrochemical conversion of chemicals to electricity also employ graphite electrodes and components.

Although purity is not critical in many uses of natural graphites, modern battery and fuel cell graphites must meet increasingly rigid specifications for purity because certain elements are now known to significantly reduce performance when present even in trace amounts.

The properties of graphite materials that pertain to strength and the ability to deform elastically are also of increasing industrial significance. The graphite crystal is made up of a stack of planes of carbon atoms. Within a plane, the atoms are held together with very strong covalent bonds that give the graphite crystal enormous strength in the direction parallel to the plane of the atoms. But because of the relatively long distance between atoms in adjacent planes, the cohesive forces between adjacent planes are very weak. As a result, the graphite crystal has properties of strength which greatly depend on the direction of the applied stress. It has long been the aim of carbon scientists to exploit the enormous strength of the plane of carbon atoms. A strong graphite material will, therefore, have the layer planes of the graphite crystallites alligned as accurately as possible parallel to the direction of the applied stress. Imperfections and the presence of extraneous elements within the atomic structure will reduce the strength of the graphite. Hence, purity and crystalline orientation are key factors in determining the ultimate strength of a graphite material.

Purity is also a main factor in the ability of a graphitic material to withstand oxidation and other chemical attack. Oxidation is known to occur preferentially at the imperfections in the crystalline plane and at the edge of the plane. Natural impurities that occur within the crystalline structure, such as ash forming materials, are also known to catalyze the oxidation, and thereby to increase the rate of attack.

Natural mineral graphite, particularly the natural flake graphite is a highly ordered crystalline graphite which possesses the useful properties of slip, inertness and electrical conductivity. Unfortunately, there are but a few deposits worldwide of mineral graphite, particularly those having flake graphite in sufficient recoverably quantity to be of practical commercial use. Moreover, the graphite ore zones within these deposits are becoming increasingly more difficult to mine and upgrade to meet the specifications for current use. As a result, many such graphite mining operations in the United States and in many other countries, have been terminated because of these adverse economic factors. The United States now must import its entire needs for flake graphite, and because there are only several existing sources worldwide, the price of quality flake has escalated very rapidly in recent years.

Similar to other mined ores, the concentration of the mineral as present in the ore can be beneficiated by conventional ore dressing methods which physically separate the gangue components from the desired graphite mineral. In the prior art, a combination of sizing, gravity concentration and flotation operations have been applied to the ground ore for this purpose. The upper limit of physical beneficiation will depend on the specific nature of the association of the gangue components with the mineral graphite. Gangue minerals that are present in extremely fine size and that are finely disseminated throughout and within the graphite grains cannot be separated by physical methods. Natural graphite concentrations available commercially generally range in purity from 85% to 95% carbon content with the balance being the more difficult to remove gangue constituents generally comprising quartz, clays, pyrite and other components.

In the prior art, higher carbon content graphites have been made from these physical concentrates by chemically digesting the gangue minerals. However, chemical treatment requires very rigorous conditions using high acid concentrations for extended periods. It is expensive because it entails numerous steps of digestion, washing, and drying of the graphite, and is further complicated by the need for disposal of spent acids in an environmentally acceptable manner.

Accordingly, in view of the deficiencies and disadvantages of presently available natural mineral graphite, it is an object of the present invention to provide a thermally treated graphite product having substantially increased graphitic ordering, electrical conductivity, and strength and resiliency in compression.

It is also an object of the present invention to provide other and natural mineral carbonaceous materials, such as anthracite, which have the favourable characteristics of increased graphitic ordering, electrical conductivity, and strength and resiliency in compression.

According to the present invention, there is provided a method for modifying the properties of naturally occurring carbon materials characterised in that the method comprises the steps of: introducing a charge of carbonaceous primer material into a fluidizing zone; passing a fluidizing medium through said carbonaceous primer material within the fluidizing zone at a velocity sufficient to fluidize substantially uniformly said carbonaceous primer material; heating said carbonaceous primer material while in such fluidized state to at least approximately 2500°C; introducing within the fluidizing zone a carbon material to be thermally treated; maintaining said material within said fluidizing zone for an average residence time sufficient to increase resiliency of the treatment material at least approximately 100%, while simultaneously maintaining such fluidizing and heating conditions; and withdrawing and cooling said material.

Higher degrees of carbonaceous purity can be achieved by a substantially single-stage thermal purification process. Thermal purification involves heating the graphite materials to temperatures high enough to cause the impurities to volatilize. For example, a natural flake graphite concentrate having a carbon content of 84% was thermally beneficiated by treatment at a temperature of about 2500°C to yield a product graphite containing less than 0.3% impurities.

Because thermal beneficiation involves decomposition and vaporization of impurities which may have relatively low vapor pressure, even at very high temperature, it was found that use of an inert sweep gas greatly increases the rate of the purification process. And because extremely high temperatures are required to achieve the thermal removal of elements that may tend to react to form stable carbides, such as silicon and aluminum, it has been found that the most effective means to generate the required temperature within the individual graphite particles is to heat electrothermally the particles by the passage of electrical current directly through the particle bed in the manner of charge-resistor heating. Furthermore, by maintaining the bed of graphite material being purified in a fluidized state, that is having the weight of the bed essentially supported by a flowing gas stream, it is possible to conveniently heat the fluidized material electrothermally in a highly uniform manner while continuously feeding to the fluidized-bed fresh feed to be purified and continuously withdrawing material that has been retained a sufficient time at a temperature to be essentially completely purified. Because carbon and especially graphite is a conductor of electricity, it has been found that the most convenient means to heat the material to the elevated temperatures required for purification is to pass electric current directly through the bed of particulate by means of carbon or graphite electrodes positioned to be in direct contact with the bed of material.

The invention produces a thermally purified natural mineral carbonaceous material, especially graphite, but also anthracite, wherein the crystalline structure of the carbonaceous material is modified towards a more graphitic structure by the removal of gangue particles from the crystalline structure thereby to increase the ultimate strength of the carbonaceous material.

The removal of the imperfections within the crystalline plane provides a purified carbonaceous product having an increased resilience of at least approximately 100%, increased electrical conductivity of at least approximately 100%, decreased gangue content to less than 1% by weight, and thereby displaying increased resistivity to oxidization attack.

An embodiment of the present invention will now be more particularly described in the following Examples and in connection with an apparatus as set forth in the following drawings, in which:

FIGURE 1 is a sectional view of the apparatus;

FIGURE 2 is an enlarged view of the apparatus illustrated in Figure 1; and

FIGURE 3 is a sectional view of a portion of the apparatus taken along lines 3--3 of Figure 2.

EXAMPLE I

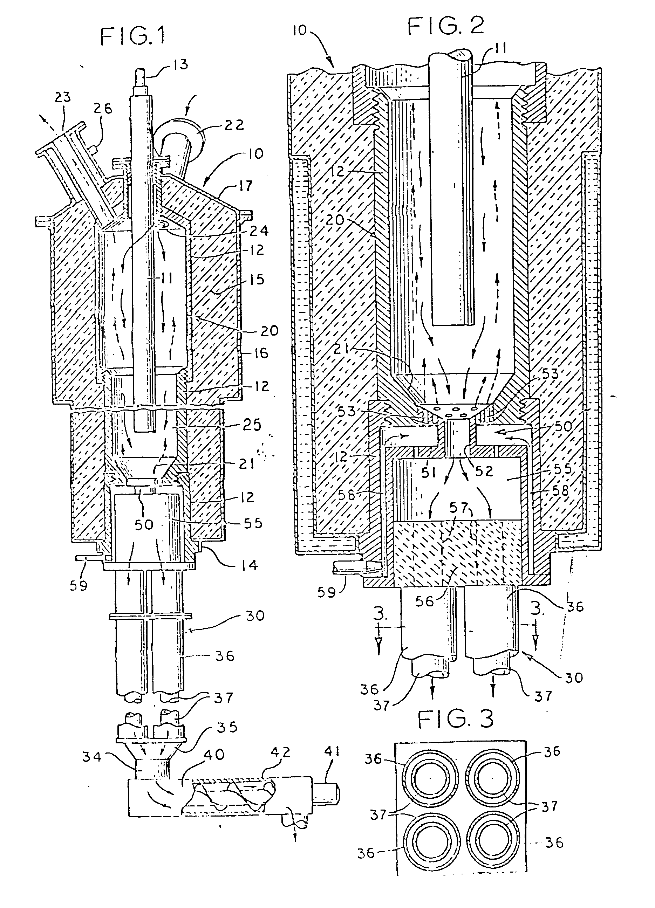

A furnace of 0.356m (14 inch) diameter of the type shown in Figure 1 was heated to a temperature of 2500°C by passing electric current through a fluidized bed of granular petroleum coke having a size between 841-210μm (20 and 65 Tyler mesh). Nitrogen gas introduced at the base of the furnace at a flow rate of 0.184m³/min at 0°C (7 SCFM) was used to fluidized the bed of coke fines. During the heating up period, coke material was continuously fed by gravity to the furnace through the furnace feed entry port in the furnace lid. Coke material from the furnace bed was continuously removed by gravity through the solids flow control device to maintain the inventory of material within the bed constant at approximately 85 pounds (38.55 kg). After achieving a temperature of 2500°C, the petroleum coke feed material was replaced with a feed material comprising Norwegian natural flake graphite particles of the general size range of less than 210μm (65 Tyler mesh) with 70 percent of the graphite flake size less than 74μm (200 mesh). The ash content of the feed graphite was 11.8 percent. A total of 565 pounds (256.28 kg) of Norwegian flake graphite was fed at an average rate of about 30 pounds (13.61 kg) per hour. The temperature within the furnace was maintained between 2500°C and 2772°C by passage of approximately 100 KW power through graphite electrodes in direct contact with the bed.

Approximately 300 pounds (136.08 kg) of purified flake graphite were recovered by continuous removal through the base of the furnace. This purified graphite product contained less than 0.1 percent ash. A comparison of the measured properties of this material before and after thermal purification by the process described is given in Table I.

TABLE I

COMPARISON OF PROPERTIES OF THERMALLY
PURIFIED NORWEGIAN FLAKE GRAPHITE

| | BEFORE THERMAL PROCESSING | AFTER THERMAL PROCESSING |
|---|---|---|
| Ash Content, Percent | 11.8 | 0.1 |
| Particle Density gm/cc | 2.25 | 2.16 |
| Electrical Resistivity, ohms/in$^2$/in | 0.0141 (0.0358 ohms cm$^2$/cm) | 0.0072 (0.0183 ohms cm$^2$/cm) |
| Resiliency[1], Percent | 10-11 | 22-25 |
| Screen Analyses: | | |
| 35 X 48 | T | 1.8 |
| 48 X 65 | 0.6 | 1.6 |
| 65 X 80 | 7.2 | 9.8 |
| 80 X 100 | 17.5 | 28.2 |
| 100 X 200 | 62.4 | 58.1 |
| 200 X 300 | 9.1 | 0.5 |
| Minus X 300 | 3.2 | 0 |

EXAMPLE II

The same furnace used in the case of the prior example was heated electrothermally to above 2500°C using a fluidized bed of granular calcined petroleum coke in the size range of minus 841μm (20 Tyler mesh) plus 210μm (65 Tyler mesh). Nitrogen gas at the rate of about 0.210 m³/min at 0°C (8 SCFM) was used for fluidization. After achieving 2500°C, a natural graphite obtained from the Covalmar mine in the state of Sonora in Mexico, crushed to the size range of minus 841μm (20 mesh) to 210μm (70 mesh) was fed to the furnace at a rate between 25 and 40 pounds (11.34 and 18.14 kg) per hour for a period of 13 hours. The impurities were volatilized and removed from the furnace by the nitrogen sweep gas. Combustibles contained in the gaseous effluent were ignited and burned in air at the furnace exhaust port.

A total of 166 pounds (75.3 kg) of purified graphite was obtained from the discharge at the base of the furnace. A comparison of the properties of the Mexican graphite before and after the furnace treatment are given in Table II.

TABLE II

COMPARISON OF PROPERTIES OF THERMALLY
PURIFIED MEXICAN CRYSTALLINE GRAPHITE

| | BEFORE THERMAL PROCESSING | AFTER THERMAL PROCESSING |
|---|---|---|
| Ash Content, Percent | 27 | 0.3-0.4 |
| Sulfur Content, Percent | 0.115 | 0.005-0.012 |
| Particle Denisty, gm/cc | 2.30 | 2.08 |
| Resiliency[1], Percent | 20-22 | 57-65 |
| Electrical Resistivity, ohms/in$^2$/in | 0.0616 (0.156 ohms cm$^2$/cm) | 0.020 (0.051 ohms cm$^2$/cm) |
| Screen Analyses: | | |
| +20 | 0.4 | – |
| 20 X 28 | 18.1 | 14.0 |
| 28 X 35 | 34.5 | 32.4 |
| 35 X 48 | 27.6 | 31.4 |
| 48 X 65 | 18.2 | 18.9 |
| 65 X 80 | 1.2 | 2.5 |
| Minus X 80 | – | 0.8 |

EXAMPLE III

The furnace previously described was brought to a temperature of 2715°C by electrothermally heating granular calcined petroleum coke while fluidizing with nitrogen gas, as set forth, supra. Anthracite coal in the size range of minus 841μm (20 mesh) that was previously calcined in a gas fired furnace was fed to the furnace. Approximately 650 pounds (294.83 kg) of anthracite was introduced during an operating period of 14.5 hours.

The purified anthracite product was removed from the base of the furnace and analyzed. A comparison of the properties of the anthracite before and after the furnace treatment is given in Table III.

5

## TABLE III

### COMPARISON OF PROPERTIES OF THERMALLY
### PURIFIED ANTHRACITE COAL

| | BEFORE THERMAL PROCESSING | AFTER THERMAL PROCESSING |
|---|---|---|
| Ash Content, Percent | 10-11 | 0.4-0.6 |
| Sulfur Content, Percent | 0.53 | 0.085 |
| Particle Density, gm/cc | 1.79 | 1.88 |
| Resiliency[1], Percent | 10-13 | 37-46 |
| Electrical Resistivity, ohms/in$^2$/in | 0.165 (0.419 ohms cm$^2$/cm) | 0.041 (0.104 ohms cm$^2$/cm) |
| Screen Analyses: | | |
| +20 | 14.6 | 10.5 |
| 20 X 28 | 18.0 | 20.1 |
| 28 X 35 | 16.8 | 20.6 |
| 35 X 48 | 14.5 | 22.3 |
| 48 X 65 | 11.7 | 16.5 |
| 65 X 80 | 5.4 | 5.8 |
| 80 X 100 | 4.5 | 2.9 |
| 100 X 200 | 9.8 | - |
| Minus X 200 | 4.7 | 1.3 |

EXAMPLE IV

The resiliency data given hereinabove in regard to each of Examples I, II and III are reported as percentages which refer to the volume expansion of a sample from a fully compressed state after release of the compaction pressure.

For each of the above examples 16 grams were weighed out and compacted in a machine steel cylinder of 3.18 centimeters in diameter. The cylinder is open at the ends and closely fitting movable pistons are inserted into the cylinder from both of the open ends. This compaction mechanism is held vertically in a hand-operated hydraulic press and a compaction pressure of 10,000 psi ($6.895 \times 10^7$ N/m$^2$) was applied to each of the samples. In each case the pressure was measured by a gauge on the hydraulic line.

Measurements were made of the change in the distance of the pistons ends as a function of the applied pressure. These measurements were utilized to calculate the sample volume. After release of the 10,000 psi ($6.895 \times 10^7$ N/m$^2$) compaction pressure, a growth of the sample was observed and measured. The expansion of the sample with reference to the sample volume of 10,000 psi ($6.895 \times 10^7$ N/m$^2$) was reported as resiliency in percent for each of the above examples. The formula utilized was:

$$\text{Resiliency, percent} = \frac{Va - Vc}{Vc} \times 100$$

Where Va = volume of the sample after release of the compaction pressure.

Vc = volume of the sample when compacted at the pressure.

6

From the foregoing examples, it is evident that natural mineral carbons including graphitic carbons in crystalline and flake form and non-graphitic carbons such as anthracite can be purified by the method of this invention to yield graphitic carbon materials essentially free of ash components. Moreover, the method of this invention causes an increased degree of ordering of the carbon atoms toward the graphite crystal lattice structure. The removal of impurities from within the natural carbon material and the increase in ordering of the atoms more towards the graphite crystal structure combines to significantly increase the electrical conductivity and, presumably, the thermal conductivity of the materials treated even though there is some tendency for particle density to decrease. Importantly, also, the thermal purification yields a unique carbonaceous material substantially more resilient than the starting carbon and one that can withstand significantly higher compressive loads without breakage and which will tend to regain the original shape and volume when the compressive load is removed.

Referring now to the drawing and to Fig. 1 in particular, an electrical furnace capable of carrying out the purification method is shown and is indicated by reference numeral 10. The furnace 10 has a heating chamber 20 and a cooling chamber 30 disposed below heating chamber 20. The heating chamber 20 is substantially cylindrical in shape and terminates in a tapered bottom portion 21. Surrounding the heating chamber 20 is a heavy layer of thermal insulation 15 which is preferably encased by a metal enclosure 16. This insulation 15 serves to minimize heat loss from the heating chamber 20, thereby maximizing the efficiency of the furnace 10.

Extending through an opening 24 at the top of heating chamber 20, is a rod-type electrode 11, fabricated from electrically conductive heat-resistant material such as graphite. Electrode 11 terminates outside heating chamber 20 at an electrode terminal 13, adapted to receive a source of electrical power (not shown). The power source typically provides 20 to 200 volts between the heating chamber 20 and electrode terminal 13, though in this embodiment a voltage of 80 to 120 volts is preferably supplied.

Defining the bottom section of the substantially cylindrical wall of heating chamber 20 is a second sleeve-type electrode 12, disposed substantially coaxially relative to longitudinal electrode 11. Electrically coupled to electrode 12, but extending outside heating chamber 20, is a second electrode terminal 14 also connected to the power supply. This point may be grounded if desired. When gangue-containing carbonaceous material, such as material which may contain as much as 15% gangue is introduced inside heating chamber 20, a conductive path is established between electrode 11 through a fluidized bed to electrode 12. The application of voltage between electrodes 11 and 12 causes the material to be rapidly heated by direct electrical resistance, thereby reducing the gangue content of the material below about 0.5% and preferably below 0.02% in a manner explained in greater detail hereinafter.

Carbonaceous material to be treated, such as natural mineral graphite, is introduced into heating chamber 20 by means of an inlet 22 located at the top of furnace 10. Inlet 22 is, of course, preferably adapted to receive a continuous supply of material from conventional calcining means (not shown). It should be observed that feeding the carbonaceous material in from the top of heating chamber 20 causes the material to be desirably preheated as it drops through the freeboard space above the fluidized bed. As mentioned hereinbefore, the sizes of carbonaceous material entering heating chamber 20 through inlet 22 may vary widely, the typical range of variance being from + 841μm (20 mesh) to - 50 μm (300 Tyler mesh). The carbonaceous material entering heating chamber 20 begins to gravitate downwardly toward bottom portion 21 as indicated by the solid arrows in FIG. 1. However, as explained in greater detail hereinafter, this downward movement of carbonaceous material is opposed by the upward force of a fluidizing stream emanating from annular distribution means 50 located at the lower extremity of heating chamber 20. The fluidizing stream thus serves to agitate and suspend the material inside heating chamber 20. The portion of heating chamber 20 in which the carbonaceous material is agitated and suspended by the fluidizing stream is commonly referred to as a fluidizing zone, which is identified herein by reference numeral 25. As explained hereinbefore, the combination of the material and the fluidizing stream in the fluidizing zone is known as a fluidized bed.

The fluidizing stream generally consists of an inert gas such as nitrogen, and moves upwardly in the direction indicated by the broken arrows in FIG. 1. In this exemplary embodiment, the superficial velocity of the fluidizing stream at the bottom of heating chamber 20 is about 1.5 feet per second (0.457 m/s), while the superficial velocity of the gas stream at the top of the fluidizing zone 25 is approximately 1.0 foot per second (.305 m/s). The carbonaceous material is thus agitated and suspended inside heating chamber 20, and particularly within fluidizing zone 25, for a sufficient period of time to produce a uniformly treated product.

The difference in velocities of the fluidizing stream at the top and bottom of fluidizing zone 25 is due to the tapered configuration of bottom portion 21 and is partially offset by the evolution of gases from the incoming carbonaceous material. Due to this velocity gradient, the larger sized carbonaceous particles, which require higher velocities to fluidize, and which might otherwise tend to become more concentrated near the bottom of heating chamber 20, are dispersed throughout the bed.

The hot fluidizing gas which comprises the fluidizing stream emanating from distribution means 50, along with the volatiles and fine dust evolved from the carbonaceous material, escape through an exhaust port 23 disposed at the top of heating chamber 20. To prevent exhaust port 23 from clogging due to the solidification of condensible components such as metallic impurities sometimes associated with the carbonaceous material, port 23 is maintained at temperatures in excess of the condensation temperature of the impurities by thermal conduction from the furnace. Alternatively, heating means such as an electrical resistance heating element indicated by reference number 26, can be used. Heating element 26 maintains the metallic impurities in a vaporized state to facilitate their passage through exit port 23, and away from inlet 22, thereby preventing redisposition of the metallic impurities at the inside of the furnace. As another alternative, halogen-containing gas such as chlorine can be included in the fluidizing stream to react with metallic impurities and convert them to chlorides which are volatile and thus will not condense at exit port 23.

The production of the fluidizing stream, emanating from annular distribution means 50, is best understood by referring to FIG. 2. In particular, distribution means 50 are shown to include an annular core 51 having a central opening 52. Associated with core 51 are a plurality of evenly spaced apertures 53. Apertures 53 communicate with a substantially annular passageway 58 surrounding a portion of furnace 10 between heating chamber 20 and cooling chamber 30.

At least one fluidizing gas inlet 59, disposed outside furnace 10, cooperates with annular passageway 58 for passing a fluidizing gas thereto. The fluidizing gas is typically an inert gas such as nitrogen. The fluidizing gas passes through passageway 58 and apertures 53, into heating chamber 20 and fluidizing zone 25. At fluidizing zone 25, the fluidizing gas mixes with and agitates the carbonaceous material, introduced through inlet 22. En route through passageway 58, the fluidizing gas is subjected to the relatively high temperature from the upper section of the cooling chamber 55, and as a result, it is preheated prior to entering the fluidizing zone.

The preheating of the fluidizing gases desirably increases the viscosity thereof. This increase in viscosity enables the fluidizing gases to mix more readily with the carbonaceous material. As a result, the material including the relatively larger particles, is more uniformly agitated and fluidized in fluidizing zone 25. Comparable fluidization of the relatively larger particles comprising the material could be theoretically accomplished heretofore only by greater increasing the velocity of the fluidizing stream which increases gas usage and also increases the expenditure of energy.

As the carbonaceous material is continuously introduced into heating chamber 20, the treated product is urged downwardly through central opening 52 of core 52. The material passes through opening 52 and into a manifold 55, under the force of gravity as a result of the removal of previously treated material from below. Disposed in manifold 55 is a plug of insulation 56 which provides substantial thermal isolation between heating chamber 20 and cooling chamber 30. Insulation 56 has a plurality of passages 57 for transferring graphitized material from manifold 55 to cooling chamber 30.

As shown best in FIG. 3, cooling chamber 30 has a corresponding plurality of vertical tubes 37, cooperating with vertical passages 57 to receive the treated material. Vertical tubes 37 are preferably fabricated from stainless steel, and may be lined with graphite and porous carbon. Surrounding tubes 37 are preferably sleeves 36 adapted to carry cooling water pumped from conventional means (not shown). The cooling water in sleeves 36 serves to reduce the average temperature of the material to about 1100°C from the relatively high temperatures sometimes exceeding 2500°C in heating chamber 20.

Referring again to FIG. 1, vertical tubes 37 of cooling chamber 30 are shown terminating in a funneling member 35. Funneling member 35, which is also water-jacketed, serves to pass the cooled material through an outlet port 34 to a horizontally disposed auger 40. In this exemplary embodiment, auger 40 is water cooled and is surrounded by a water jacket 42 to further cool the completed product to about 200°C. A gas inlet (not shown) is secured to outlet port 34. Gas, such as nitrogen, typically passes through the gas inlet and passes upwardly into cooling chamber 30. Cooling chamber 30 is thus purged with a counter-current flow of gas from the inlet to prevent fluidizing gases from the fluidized bed from flowing into the cooling chamber.

Means such as a motor 41 are adapted to control the speed of auger 40, hence the rate at which material can be removed from furnace 10. By controlling the speed of auger 40, and the rate of feed of incoming material, the level of the fluidized bed is maintained constant and the time in which carbonaceous material is maintained inside furnace 10 can be determined. As a result, the material is continuously introduced, treated, cooled and removed from furnace 10. When this occurs, the gangue content of the material, upon removal from furnace 10, will generally be reduced below 0.5%, with the capability of reduction below 0.02%. Reducing the quantity of gangue to such minute percentages has been heretofore unachievable in such an economical, continuous system of the type described.

From the foregoing, the method for treating carbonaceous material inside furnace 10 should be clear. First, the material is introduced into fluidizing zone 25 of heating chamber 20. A fluidizing gas stream is then passed through the material, which is then heated in a fluidized state within the fluidizing zone. The rate of flow of the carbonaceous material through the fluidizing zone is controlled to assure that the gangue content of the material is reduced below about 0.5%, and preferably below 0.02%.

The improved thermal method of the invention envisages an average residence time within the fluidizing zone of the treatment material sufficient to reduce the ash content thereof to below approximately 1.0%, preferably approximately 0.1%-0.6%. The average residence time may be sufficient to increase the electrical conductivity of the treatment material by at least approximately 100%.

The improved thermal method may be applied to a treatment material which is a flake graphite and the residence time thereof within the fluidizing zone is sufficient to provide a thermally treated material having approximately:

| | |
|---|---|
| Ash content (Percent) | 0.1 |
| Particle Density (gm/cc) | 2.16 |
| Electrical Resistivity (ohms/in$^2$/in) | 0.0072 (0.0183 ohm cm$^2$/cm) |
| Resiliency (Percent) | 22-25 |

It may also be applied to a treatment material which is a crystalline graphite and the residence time thereof within the fluidizing zone is sufficient to provide a thermally treated material having approximately:

| | |
|---|---|
| Ash Content (Percent) | 0.3-0.4 |
| Sulfur Content (Percent) | 0.005-0.012 |
| Particle Density(gm/cc) | 2.08 |
| Resiliency (Percent) | 57-65 |
| Electrical Resistivity (ohms/in$^2$/in) | 0.020 (0.051 ohms cm$^2$/cm) |

In one other embodiment the treatment material is a calcined anthracite coal and the residence time thereof within the fluidizing zone is sufficient to provide a thermally treated material having approximately:

| | |
|---|---|
| Ash Content (Percent) | 0.4-0.6 |
| Sulfur Content (Percent) | 0.085 |
| Particle Density (gm/cc) | 1.88 |
| Resiliency (Percent) | 37-46 |
| Electrical Resistivity (ohms/in$^2$/in) | 0.041 (0.104 ohms cm$^2$/cm) |

**Claims**

1. A method for modifying the properties of naturally occurring carbon materials, characterised in that the method comprises the steps of: introducing a charge of carbonaceous primer material comprising an electrically conductive granular, non-thermally sticky solid, into a fluidizing zone; passing a fluidizing medium through said carbonaceous primer material within the fluidizing zone at a velocity sufficient to fluidize substantially uniformly said carbonaceous primer material; heating said carbonaceous primer material while in such fluidizised state to at least 2500°C; introducing within the fluidizing zone a carbon material to be thermally treated; maintaining said material within such fluidizing zone for an average residence time sufficient to increase resiliency of the treatment material at least 100%, while simultaneously maintaining such fluidizing and heating conditions; and withdrawing and cooling said material.

2. A method as claimed in claim 1, characterised in that the carbonaceous primer material comprises petroleum coke.

**3.** A method as claimed in claim 2, characterised in that the petroleum coke particles are of a size between minus 20 and plus 65 Tyler mesh (149-3360$\mu$m).

**4.** A method as claimed in any one of the preceding claims, characterised in that the fluidizing medium comprises an inert gas, preferably nitrogen.

**5.** A method as claimed in any one of the preceding claims, characterised in that the fluidizing medium is introduced at a flow rate of 7-8 SCFM corresponding to a superficial gas velocity of 0.152-0.610 m/s.

**6.** A method as claimed in any one of the preceding claims, characterised in that the solid carbonaceous primer material is fed into the fluidizing zone to be maintained therein in an amount of approximately 85 pounds (38.5 kg) and withdrawn therefrom at a controlled rate while simultaneously maintaining such heating and fluidizing thereof, to be replaced by the material to be treated.

**7.** A method as claimed in any one of the preceding claims, chracterised in that the heating of such fluidizing zone is accomplished by electrical resistance, preferably at a power level of 100 KW.

**8.** A method as claimed in any one of the preceding claims, characterised in that the graphite electrodes are disposed in direct contact with the material disposed within the fluidizing zone for electrical resistance heating thereof.

**9.** A method as claimed in any one of the preceding claims, chracterised in that the material to be treated is introduced and withdrawn at a controlled rate, preferably 25 to 45 pounds per hour. (11.34 and 18.14 kg/hr).

**10.** A method as claimed in any one of the preceding claims, characterised by the further step of combusting volatilized impurities outside the fluidizing zone.

**11.** A method as claimed in any one of the preceding claims, characterised in that said heating step is carried out at a temperature between 2500°C and 2772°C.

**Revendications**

**1.** Procédé de modification des propriétés des carbones naturels, caractérisé en ce que le procédé comprend les étapes de : introduction d'une charge de matériau carboné de départ comprenant un solide granulaire, conducteur de l'électricité, non thermiquement gluant, dans une zone de fluidification ; passage d'un milieu fluidisant à travers ledit matériau carboné de départ au sein de la zone de fluidification à une vitesse suffisante pour fluidifier de façon sensiblement uniforme ledit matériau carboné de départ ; chauffage dudit matériau carboné de départ à l'état fluidisé à au moins 2 500°C ; introduction au sein de la zone de fluidification d'un matériau de carbone à traiter thermiquement ; maintien dudit matériau au sein de la zone de fluidification pendant une durée de séjour moyenne suffisante pour augmenter le retour élastique du matériau traité d'au moins 100%, tout en conservant simultanément ces conditions de fluidification et de chauffage ; et retrait et refroidissement dudit matériau.

**2.** Procédé selon la revendication 1, caractérisé en ce que la charge de matériau carboné de départ comprend du coke de pétrole.

**3.** Procédé selon la revendication 2, caractérisé en ce que les particules de coke de pétrole ont une granulométrie comprise entre moins 20 et plus 65 mesh Tyler (149 à 3 360 $\mu$m).

**4.** Procédé selon l'une quelconque des revendications précédentes, caractérisé en ce que le milieu fluidisant comprend un gaz inerte, de préférence de l'azote.

**5.** Procédé selon l'une quelconque des revendications précédentes, caractérisé en ce que le milieu fluidisant est introduit à une vitesse d'écoulement de 7 à 8 scfm correspondant à une vitesse superficielle du gaz de 0,152 à 0,610 m/s.

EP 0 274 165 B1

6. Procédé selon l'une quelconque des revendications précédentes, caractérisé en ce que le matériau carboné solide de départ est introduit dans la zone de fluidification pour y être maintenu en une quantité d'approximativement 85 livres (38,5 kg) et en est retiré à une vitesse contrôlée, tout en maintenant simultanément son chauffage et sa fluidification, pour être remplacé par le matériau à traiter.

7. Procédé selon l'une quelconque des revendications précédentes, caractérisé en ce que le chauffage de cette zone de fluidification est réalisé par résistance électrique, de préférence à un niveau de puissance de 100 kW.

8. Procédé selon l'une quelconque des revendications précédentes, caractérisé en ce que les électrodes en graphite sont disposées en contact direct avec le matériau disposé au sein de la zone de fluidification, pour le chauffage de ce dernier par résistance électrique.

9. Procédé selon l'une quelconque des revendications précédentes, caractérisé en ce que le matériau à traiter est introduit et retiré à une vitesse contrôlée, de préférence entre 25 et 45 livres par heure (11,34 et 18,14/h).

10. Procédé selon l'une quelconque des revendications précédentes, caractérisé par l'étape subséquente de combustion des impuretés volatilisées hors de la zone de fluidification.

11. Procédé selon l'une quelconque des revendications précédentes, caractérisé en ce que ladite étape de chauffage est réalisée à une température comprise entre 2 500°C et 2 772°C.

**Patentansprüche**

1. Verfahren zum Verändern der Eigenschaften von natürlich vorkommenden Kohlenstoffmaterialien, dadurch gekennzeichnet, daß das Verfahren folgende Schritte umfaßt: Einführen einer Ladung eines kohlenstoffhaltigen Rohmaterials mit einem elektrisch leitenden, thermisch nicht klumpenden Festkörper in einen Fluidizierungsbereich; Durchführen eines fluidizierenden Mediums durch dieses kohlenstoffhaltige Rohmaterial in dem Fluidizierungsbereich mit einer Geschwindigkeit, die ausreicht, das kohlenstoffhaltige Rohmaterial zu fluidizieren; Erhitzen des kohlenstoffhaltigen Rohmaterials in einem solchen fluidizierten Zustand auf wenigstens 2500°C; Einführen eines thermisch zu behandelnden Kohlenstoffmaterials in den Fluidizierungsbereich; Halten dieses Materials innerhalb des Fluidizierungsbereichs während einer mittleren Verweildauer, die ausreicht, die Elastizität des Bearbeitungsmaterials um wenigstens 100% zu erhöhen, während gleichzeitig solche Fluidizierungs- und Erhitzungsbedingungen gehalten werden; und Entfernen und Abkühlen des Materials.

2. Verfahren nach Anspruch 1, dadurch gekennzeichnet, daß das kohlenstoffhaltige Rohmaterial Petrolkoks umfaßt.

3. Verfahren nach Anspruch 2, dadurch gekennzeichnet, daß die Petrolkoksteilchen von der Größe zwischen minus 20 und plus 65 eines Tylersiebs (149 - 3360 μm) sind.

4. Verfahren nach einem der vorhergehenden Ansprüche, dadurch gekennzeichnet, daß das fluidizierende Medium ein inertes Gas, vorzugsweise Stickstoff, umfaßt.

5. Verfahren nach einem der vorhergehenden Ansprüche, dadurch gekennzeichnet, daß das fluidizierende Mediums mit einer Durchflußrate von 7-8 SCFM eingeführt wird, was einer Gasoberflächengeschwindigkeit von 0,152 - 0,610 m/s entspricht.

6. Verfahren nach einem der vorhergehenden Ansprüche, dadurch gekennzeichnet, daß das feste, kohlenstoffhaltige Rohmaterial in den Fluidizierungsbereich eingeführt wird, um darin in einer Menge von etwa 85 Pfund (38,5 kg) gehalten zu werden und von dort mit einer kontrollierten Rate entfernt zu werden, während gleichzeitig solche Fluidizierungs- und Erhitzungsbedingungen aufrecht erhalten werden, um von dem zu bearbeitenden Material ersetzt zu werden.

7. Verfahren nach einem der vorhergehenden Ansprüche, dadurch gekennzeichnet, daß das Erhitzen eines solchen Fluidizierungsbereiches durch elektrischen Widerstand vorzugsweise mit einem Leistungswert von 100 kW durchgeführt wird.

8. Verfahren nach einem der vorhergehenden Ansprüche, dadurch gekennzeichnet, daß die Graphitelektroden in direktem Kontakt mit dem in dem Fluidizierungsbereich angeordneten Material für dessen Erhitzen durch elektrischen Widerstand stehen.

9. Verfahren nach einem der vorhergehenden Ansprüche, dadurch gekennzeichnet, daß das zu bearbeitende Material mit einer kontrollierten Rate, vorzugsweise 25 bis 45 Pfund pro Stunde (11,34 bis 18,14 kg/Std), eingeführt und entfernt wird.

10. Verfahren nach einem der vorhergehenden Ansprüche, gekennzeichnet durch den weiteren Schritt des Verbrennens von verflüchtigten Verunreinigungen außerhalb des Fluidizierungsbereichs.

11. Verfahren nach einem der vorhergehenden Ansprüche, dadurch gekennzeichnet, daß der Erhitzungsschritt bei einer Temperatur zwischen 2500°C und 2772°C durchgeführt wird.

FIG.1

FIG. 2

FIG. 3